(19) **Europäisches Patentamt European Patent Office Office européen des brevets**

(11) **EP 4 600 229 A1**

(12) **EUROPEAN PATENT APPLICATION**

(43) Date of publication:
13.08.2025 Bulletin 2025/33

(51) International Patent Classification (IPC):
*C03C 17/32* (2006.01)  *G06F 1/16* (2006.01)

(21) Application number: 25154745.1

(22) Date of filing: 29.01.2025

(52) Cooperative Patent Classification (CPC):
**C03C 17/32; C03C 15/00; G06F 1/1652;** C03C 21/00

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 02.02.2024 KR 20240016430

(71) Applicant: **Samsung Display Co., Ltd.**
**Gyeonggi-Do (KR)**

(72) Inventor: **Oh, Aely**
**Yongin-si, Gyeonggi-Do (KR)**

(74) Representative: **Gulde & Partner**
**Patent- und Rechtsanwaltskanzlei mbB**
**Berliner Freiheit 2**
**10785 Berlin (DE)**

(54) **WINDOW AND ELECTRONIC DEVICE INCLUDING THE SAME**

(57)  A window including a base glass having at least one groove part recessed from at least one surface of an upper surface or a lower surface, and including a filling part configured to fill the at least one groove part and having a mineral with the dispersion degree of about 0.02 or less.

FIG. 6A

EP 4 600 229 A1

**Description**

BACKGROUND

1. Field

The present invention relates to a window and an electronic device including the same, and more particularly, to a foldable window and an electronic device including the same.

2. Description of Related Art

Various types of electronic devices are being used in order to provide image information to users. Recently, electronic devices including flexible display panels, capable of folding or bending, are being developed. The flexible electronic device, unlike a rigid electronic device, may be deformable in various forms, for example, foldable, rollable, or bendable, and may thus have portability characteristics regardless of the screen size used for displaying.

This flexible electronic device requires a window to protect the display panel, etc., without impairing a folding or bending operation.

SUMMARY

In an embodiment, the present invention provides a window which has excellent folding characteristics and in which visible marks on a folded portion is remedied. Additionally, the different reflection colors that are viewed at the folded portion, due to difference in refractive index, is also addressed.

In an embodiment, the invention also provides an electronic device having good folding characteristics and excellent display quality.

In an embodiment, the invention provides a window for a display device or an electronic device, the window including a base glass including at least one groove part recessed from at least one surface of an upper surface or a lower surface, and a filling part configured to fill the at least one groove part, and including a mineral having a dispersion degree of about 0.02 or less, wherein the dispersion degree is a difference in the refractive index between a red color and a purple color of a color spectrum. The dispersion degree is preferably 0.015 or less, more preferably 0.01 or less.

In an embodiment, the mineral may be $CaF_2$, $Ca_5(PO_4)_3X$, $BaSO_4$, or $LiAlSi_4O_{10}$, wherein X may be F, Cl, or OH.

In an embodiment, a difference in Abbe's number between the base glass and the filling part may be about 2 or less, preferably 1.5 or less, more preferably 1 or less.

In an embodiment, the filling part may include the mineral and a base resin in which the mineral is dispersed, wherein a content of the mineral may be about 2 phr to about 6 phr within the entire filling part, preferably 2.5 phr to 5.5 phr., more preferably 3 phr to 5 phr, 3.5 phr to 4.5 phr, or 3 phr to 4 phr.

In an embodiment, the base resin may include at least one of an acrylate-based resin, a urethane-based resin, an epoxy-based resin, a polyester-based resin, a polyether-based resin, or an ABS resin.

In an embodiment, the filling part may include the mineral and a base resin in which the mineral is dispersed, wherein a content of the mineral may be about 2 phr to about 6 phr within the entire filling part.

In an embodiment, a refractive index of the base glass at about 589 nm may be about 1.50 to about 1.51.

In an embodiment, a difference in the refractive index between the base glass and the filling part at about 589 nm may be about 0.01 or less.

In an embodiment, the window may include a folding part having the at least one groove part, and a non-folding part which is disposed adjacent to the folding part and in which the upper surface and the lower surface are flat surfaces.

In an embodiment, the base glass may be tempered glass including a base layer and compressive stress layers respectively disposed on an upper part and a lower part of the base layer.

In an embodiment, the base glass may be ultra-thin tempered glass having a thickness of about 30 $\mu$m to about 300 $\mu$m, preferably 60 $\mu$m to 270 $\mu$m, 90 to 240 $\mu$m, 120 $\mu$m to 210 $\mu$m, or 150 $\mu$m to 180 $\mu$m.

In an embodiment, a transmittance of the filling part in a visible-light range may be about 90% or greater, preferably 95% or greater .

In an embodiment, an electronic device includes a display module having a folding display part foldable with respect to a folding axis extending in one direction, and a first non-folding display part and a second non-folding display part disposed apart from each other with the folding display part disposed therebetween, and a window disposed above the display module, and including a folding part corresponding to the folding display part, and a first non-folding part and a second non-folding part respectively corresponding to the first non-folding display part and the second non-folding display part, wherein the window includes a base glass having at least one groove part, recessed from at least one surface of an upper surface or a lower surface, in the folding part, and a filling part configured to fill the at least one groove part, and containing a mineral having a dispersion degree of about 0.02 or less, wherein the dispersion degree is a difference in refractive index between a red color and a purple color of a color spectrum.

In an embodiment, a difference in Abbe's number between the base glass and the filling part may be about 2 or less.

In an embodiment, a content of the mineral may be about 2 phr to about 6 phr within the entire filling part.

In an embodiment, the mineral may be $CaF_2$, $Ca_5(PO_4)_3X$, $BaSO_4$, or $LiAlSi_4O_{10}$, and X may be F, Cl, or OH.

In an embodiment, a refractive index of the base glass at about 589 nm may be about 1.50 to about 1.51, and a difference in the refractive index between the base glass and the filling part at about 589 nm may be about 0.01 or less.

In an embodiment, the base glass may be tempered glass including a base layer and compressive stress layers respectively disposed on an upper part and a lower part of the base layer.

In an embodiment, an electronic device, having a folding region that is deformable to a folded or an unfolded state and a non-folding region disposed adjacent to the folding region, includes a display panel, and a window disposed on the display panel, wherein the window includes a base glass having a folding part corresponding to the folding region and containing a groove pattern, and a non-folding part corresponding to the non-folding region, and a filling part configured to fill the groove pattern, wherein the filling part includes a base resin and a mineral dispersed in the base resin, and wherein a difference in Abbe's number between the base glass and the filling part is about 2 or less.

In an embodiment, the mineral may be $CaF_2$, $Ca_5(PO_4)_3X$, $BaSO_4$, or $LiAlSi_4O_{10}$, and X may be F, Cl, or OH.

In an embodiment, a refractive index of the base glass at about 589 nm may be about 1.50 to about 1.51, and a difference in the refractive index between the base glass and the filling part at about 589 nm may be about 0.01 or less.

In an embodiment, an upper surface and a lower surface of the non-folding part may be flat surfaces.

BRIEF DESCRIPTION OF THE FIGURES

The accompanying drawings are included to provide a further understanding of the invention, and are incorporated in and constitute a part of this specification. The drawings illustrate embodiments of the invention and, together with the description, serve to explain principles of the invention. In the drawings:

FIG. 1A is a perspective view illustrating an unfolded state of an electronic device, according to an embodiment;

FIG. 1B is a perspective view illustrating an inner-folding process of the electronic device of FIG. 1A, according to an embodiment;

FIG. 1C is a perspective view illustrating an outer-folding process of the electronic device of FIG. 1C, according to an embodiment;

FIG. 2A is a perspective view illustrating an unfolded state of an electronic device, according to an embodiment;

FIG. 2B is a perspective view illustrating an inner-folding process of the electronic device of FIG. 2A, according to an embodiment;

FIG. 2C is a perspective view illustrating an outer-folding process of the electronic device of FIG. 2A, according to an embodiment;

FIG. 3A is a perspective view of an electronic device, according to an embodiment;

FIG. 3B is a perspective view illustrating a multi-folded state of the electronic device of FIG. 3A, according to an embodiment;

FIG. 3C is a perspective view illustrating a multi-folded state of the electronic device of FIG. 3A, according to an embodiment;

FIG. 4 is an exploded perspective view of an electronic device, according to an embodiment;

FIG. 5 is a cross-sectional view of an electronic device, according to an embodiment;

FIG. 6A is a cross-sectional view illustrating one portion of a window for an electronic device, according to an embodiment;

FIG. 6B is a cross-sectional view illustrating one portion of a window for an electronic device, according to an embodiment;

FIG. 7 is a cross-sectional view illustrating one portion of a window for an electronic device, according to an embodiment; and

FIG. 8 is a cross-sectional view illustrating one portion of a window for an electronic device, according to an embodiment.

DETAILED DESCRIPTION

Embodiments of the invention will be described below in more detail with reference to the accompanying drawings. The invention may, however, be embodied in different forms and should not be construed as limited to the embodiments set forth herein. Rather, these embodiments are provided so that this disclosure will be thorough and complete, and will fully convey the scope of the invention to those skilled in the art.

In this specification, it will be understood that when an element (or a region, a layer, a portion, or the like) is referred to as being "on", "connected to" or "coupled to" another element, it may be directly disposed on, connected or coupled to the other element, or intervening elements may be disposed therebetween.

Like reference numerals or symbols refer to like elements throughout. In the drawings, the thickness, the ratio, and the size of the element are exaggerated for effective description of the technical contents. As used herein, the term "and/or" includes any and all combinations of one or more of the associated listed items.

It will be understood that, although the terms first, second, etc. may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed below could be termed a second element, component, region, layer or section without departing from the scope of the inventive concept. Similarly, a second element, component, region, layer or section may be termed a first element, component, region, layer or section. In this specification "a", "an" and "the" are intended to include the plural forms as well, unless the context clearly indicates otherwise.

In addition, terms of "below", "on lower side", "above", "on upper side", or the like may be used to describe the relationships of the elements illustrated in the drawings. These terms have relative concepts and are described on the basis of the directions indicated in the drawings.

It will be further understood that the terms "includes" and/or "having", when used in this specification, specify the presence of stated features, integers, steps, operations, elements, and/or components, but do not preclude the presence or addition of one or more other features, integers, steps, operations, elements, components, and/or groups thereof.

In this specification, the term "directly disposed" may mean there is no intervening layer, film, region, substrate, or the like between one layer, film, region, substrate, or the like and the other. For example, the term "directly disposed" may refer to being disposed between two layers or two members without using an additional member such as an adhesion member.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, a window according to an embodiment and an electronic device according to an embodiment will be described with reference to the accompanying drawings.

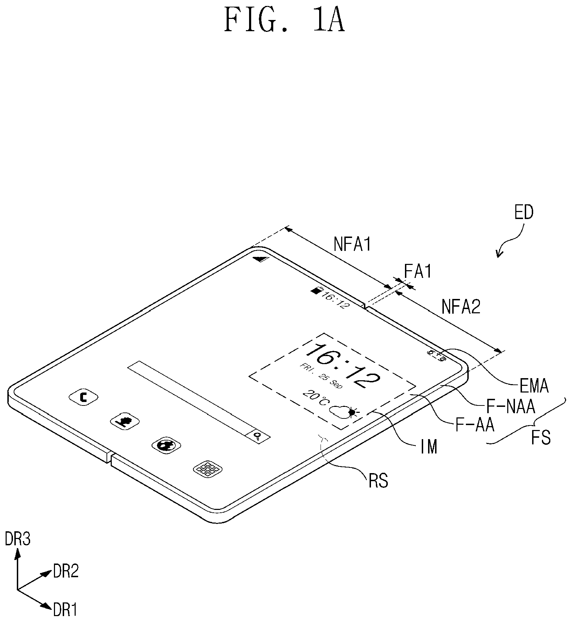

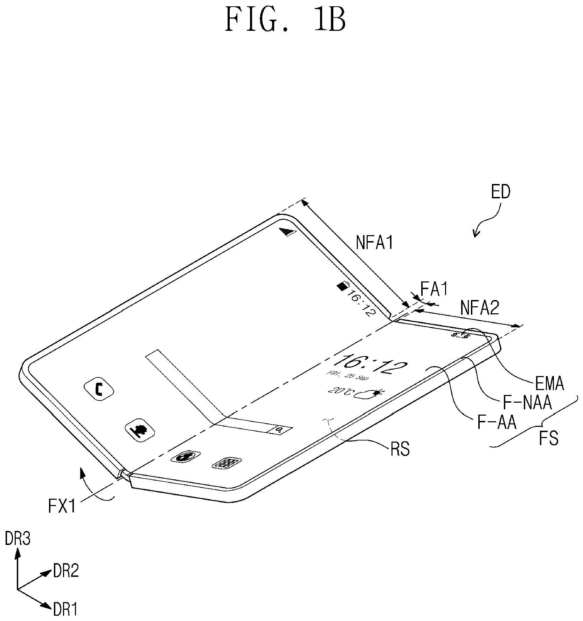

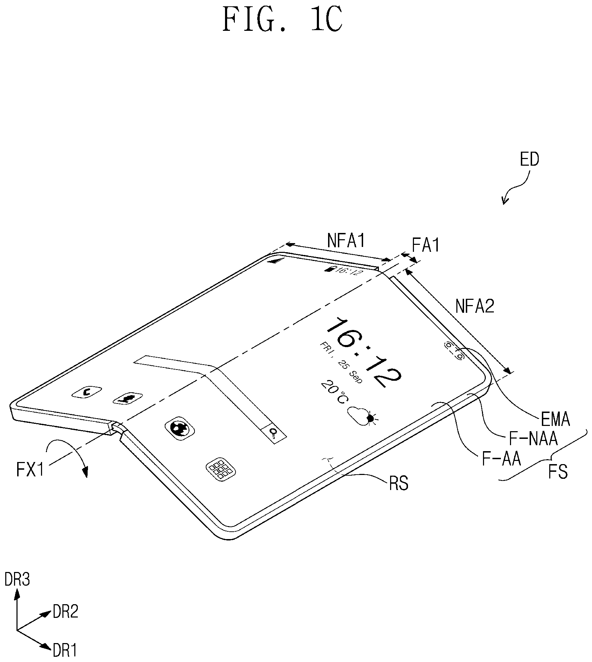

FIG. 1A is a perspective view illustrating an unfolded state of an electronic device, according to an embodiment. FIG. 1B is a perspective view illustrating an inner-folding process of the electronic device illustrated in FIG. 1A, according to an embodiment. FIG. 1C is a perspective view illustrating an outer-folding process of the electronic device illustrated in FIG. 1A, according to an embodiment.

An electronic device ED, according to an embodiment, may be activated in response to electrical signals. For example, the electronic device ED may be a mobile phone, a tablet computer, a car navigation system, a game console, or a wearable device, but the invention is not limited thereto. In this specification, FIG. 1A, etc. exemplarily illustrates that the electronic device ED is a mobile phone.

In an embodiment and referring to FIGS. 1A to 1C, the electronic device ED may include a first display surface FS defined by a first directional axis DR1 and a second directional axis DR2 crossing the first directional axis DR1. The electronic device ED may provide an image IM to a user through the first display surface FS. The electronic device ED, according to an embodiment, may display the image IM toward a third directional axis DR3 through the first display surface FS which is directed parallel to each of the first direction axis DR1 and the second direction axis DR2. In this specification, a front surface (or upper surface) and a rear surface (or lower surface) of each of components are defined on the basis of a direction in which the image IM is displayed. The front surface and the rear surface may be opposed to each other in the third directional axis DR3, and the normal direction of each of the front surface and the rear surface may be directed parallel to the third directional axis DR3.

In an embodiment, the electronic device ED may include the first display surface FS and a second display surface RS. The first display surface FS may include an active region F-AA and a peripheral region F-NAA. An electronic module region EMA may be included in the active region F-AA. The second display surface RS may be defined as a surface opposed to at least a portion of the first display surface FS. That is, the second display surface RS may be defined as a portion of the rear surface of the electronic device ED.

In an embodiment, the electronic device ED may detect an external input applied from the outside, where the external input may include various types of inputs provided from the outside of the electronic device ED. For example, the external input may include not only an external input applied by contact of a part of a user's body such as a hand, but also an external input applied in proximity to, or adjacent at a predetermined distance, to the electronic device ED (for example, hovering). In addition, the external input may have various forms such as power, pressure, temperature, and light.

In an embodiment and referring to FIG. 1A and the following drawings, the first directional axis DR1 to the third directional axis DR3 are illustrated, and directions indicated by the directional axes DR1, DR2, and DR3, described in this specification, may be relative concepts, and may thus be changed to other directions. In addition, the directions indicated by the directional axes DR1, DR2, and DR3 may be described as first to third directions, respectively, which may be denoted as the same reference numerals or symbols.

In an embodiment, the active region F-AA of the electronic device ED may be activated in response to electrical signals. The electronic device ED, according to an embodiment, may display the image IM through the active region F-AA. In addition, various types of external inputs may be detected in the active region F-AA. The peripheral region F-NAA is disposed adjacent to the active region F-AA. The peripheral region F-NAA may have a predetermined color and may surround the active region F-AA. Accordingly, the shape of the active region F-AA may be substantially defined by the peripheral region F-NAA. However, this is exemplarily illustrated, and, in other embodiments, the peripheral region F-NAA may also be disposed adjacent to only one side of the active region F-AA and may also be omitted. The electronic device ED, according to an embodiment, may include the active region in various shapes, and is not limited to any one embodiment of the invention.

In an embodiment, the electronic device ED may include a folding region FA1 and non-folding regions NFA1 and NFA2. In an embodiment, the non-folding regions NFA1 and NFA2 may be disposed adjacent to the folding region FA1 with the folding region FA1 disposed therebetween. The electronic device ED, according to an embodiment, may include a first non-folding region NFA1 and a second non-folding region NFA2 disposed apart from each other in the first directional axis DR1 with the folding region FA1 disposed therebetween. For example, the first non-folding region NFA1 may be disposed on one side of the folding region FA1 along the first direction DR1, and the second non-folding region NFA2 may be disposed on the other side of the folding region FA1 along the first direction DR1.

It should be appreciated that FIGS. 1A to 1C illustrate an embodiment of the electronic device ED including one folding region FA1, but the invention is not limited thereto, and in another embodiment a plurality of folding regions may be defined in the electronic device ED. For example, the electronic device, according to an embodiment, may include at least two folding regions, and in addition, may include at least three non-folding regions disposed with each of the folding regions disposed therebetween.

In an embodiment and referring to FIG. 1B, the electronic device ED may be folded with respect to a first folding axis FX1. The first folding axis FX1 may be a virtual axis extending in the direction of the second directional axis DR2, and the first folding axis FX1 may be parallel to a long-side direction of the electronic device ED. The first folding axis FX1 may extend along the second directional axis DR2 on the first display surface FS.

In an embodiment, the electronic device ED may be folded with respect to the first folding axis FX1 to be deformed into an inner-folded state where one region of the first display surface FS, overlapping the first non-folding region NFA1, and the other region, overlapping the second non-folding region NFA2, face each other.

In the inner-folded state of the electronic device ED, according to an embodiment, the second display surface RS may be viewed to a user. The second display surface RS may further include an electronic module region where an electronic module having various components is disposed and is not limited to any one embodiment of the invention.

In an embodiment and referring to FIG. 1C, the electronic device ED may be folded with respect to the first folding axis FX1 to be deformed into an outer-folded state where one region of the second display surface RS, overlapping the first non-folding region NFA 1, and the other region, overlapping the second non-folding region NFA2, face each other.

However, the invention is not limited thereto, and the electronic device ED may be folded with respect to a plurality of folding axes, so that respective portions of the first display surface FS and the second display surface RS face each other, and the number of folding axes and the corresponding number of non-folding regions are not particularly limited.

In an embodiment, various electronic modules may be disposed in the electronic module region EMA. For example, the electronic module may include at least one of a camera, a speaker, a light-detecting sensor, or a heat-detecting sensor. The electronic module region EMA may detect an external subject received through the first display surface FS or the second display surface RS, or provide sound signals, such as a voice, to the outside through the display surfaces FS or RS. The electronic module may also include a plurality of components and is not limited to any one embodiment of the invention.

In an embodiment, the electronic module region EMA may be surrounded by the active region F-AA and the peripheral region F-NAA. However, the invention is not limited thereto, and the electronic module region EMA may be disposed in the active region F-AA, and is not limited to any one embodiment of the invention.

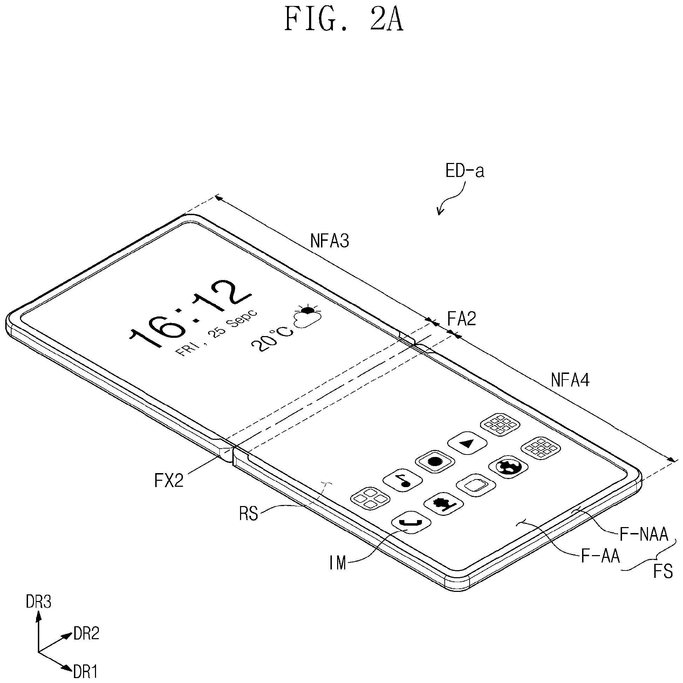

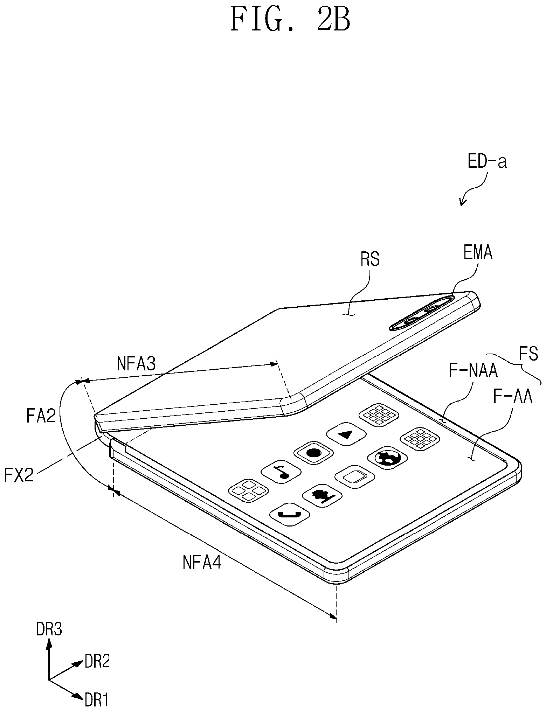

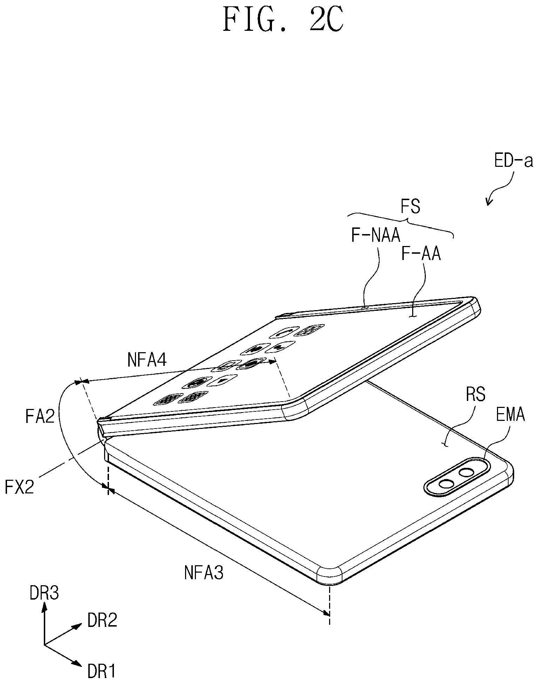

FIG. 2A is a perspective view illustrating an unfolded state of an electronic device, according to an embodiment. FIG. 2B is a perspective view illustrating an inner-folding process of the electronic device illustrated in FIG. 2A, according to an embodiment. FIG. 2C is a perspective view illustrating an outer-folding process of the electronic device illustrated in FIG. 2A, according to an embodiment.

In an embodiment, an electronic device ED-a may be folded with respect to a second folding axis FX2 extending in a direction that is parallel to a second directional axis DR2. FIG. 2B illustrates that the extending direction of the second folding axis FX2 is directed parallel to the extending direction of a short-side of the electronic device ED-a. However, the invention is not limited thereto.

In an embodiment, the electronic device ED-a may include at least one folding region FA2 and non-folding regions NFA3 and NFA4 disposed adjacent to the folding region FA2. The non-folding regions NFA3 and NFA4 may be disposed apart from each other with the folding region FA2 disposed therebetween.

In an embodiment, the folding region FA2 has a predetermined curvature and radius of curvature. In an embodiment, the electronic device ED-a may be inner-folded such that a first non-folding region NFA3 and a second non-folding region NFA4 face each other, and a display surface FS is not exposed to the outside. In addition, referring to FIG. 2C, the electronic device ED-a, according to an embodiment, may be outer-folded such that a first display surface FS is exposed to the outside.

In an embodiment, the electronic device ED-a may include a second display surface RS, where the second display surface RS may be defined as a surface opposed to at least a portion of the first display surface FS. The second display surface RS may include an electronic module region EMA where an electronic module having various components is disposed. In addition, an image or movie may be displayed on at least a portion of the second display surface RS.

Additionally, in the unfolded state of the electronic device ED-a, according to an embodiment, the first display surface FS may be viewed to a user, and in the inner-folded state, the second display surface RS may be viewed to the user.

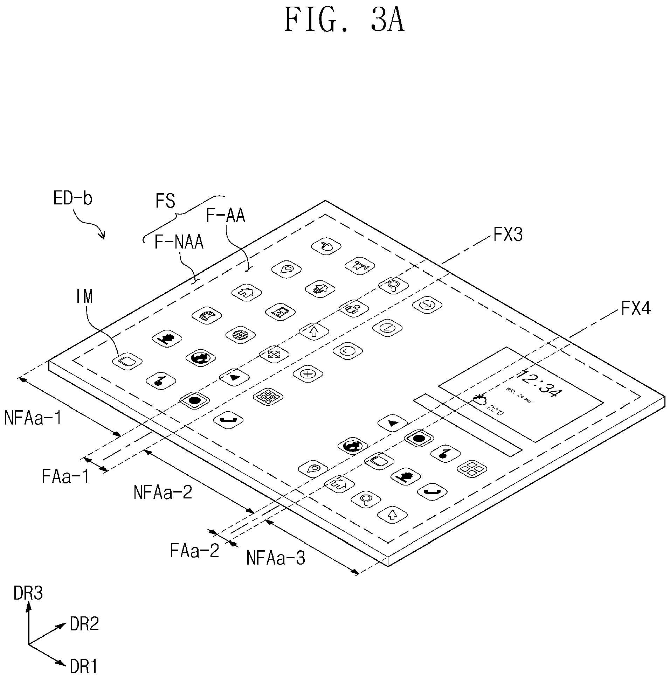

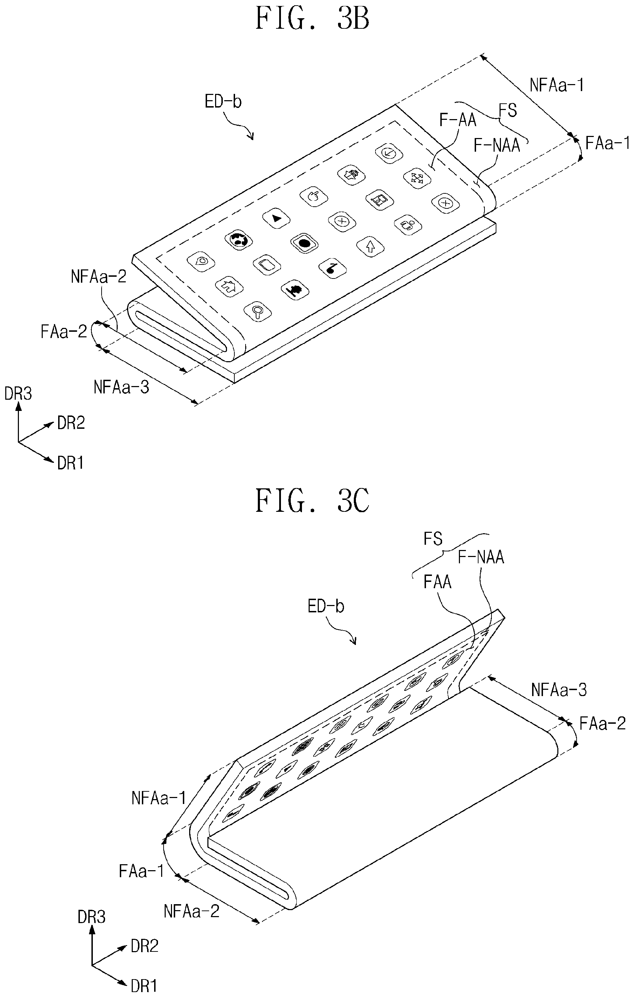

FIG. 3A is a perspective view illustrating an unfolded state of an electronic device ED-b, according to an embodiment. FIGS. 3B and 3C are perspective views each illustrating a multi-folded state of the electronic device ED-b illustrated in FIG. 3A, according to an embodiment.

In an embodiment and referring to FIGS. 3A to 3C, the electronic device ED-b may be a multi-foldable device including a plurality of folding regions. The electronic device ED-b may include a plurality of folding regions FAa-1 and FAa-2 and a plurality of non-folding regions NFAa-1, NFAa-2, and NFAa-3. The electronic device ED-b, according to an embodiment, may include a first folding region FAa-1, a second folding region FAa-2, a first non-folding region NFAa-1, a second non-folding region NFAa-2, and a third non-folding region NFAa-3. In a first direction DR1, the first folding region FAa-1 is disposed between the first non-folding region NFAa-1 and the second non-folding region NFAa-2, and the second folding region FAa-2 is disposed between the second non-folding region NFAa-2 and the third non-folding region NFAa-3. FIGS. 3A to 3C exemplarily illustrate two folding regions FAa-1 and FAa-2 and three non-folding regions NFAa-1, NFAa-2, and NFAa-3, but the numbers of the folding regions FAa-1 and FAa-2 and the non-folding regions NFAa-1, NFAa-2, and NFAa-3 are not limited thereto, and may further increase.

In an embodiment and referring to FIGS. 3A and 3B, the first folding region FAa-1 may be folded with respect to a third folding axis FX3 directed parallel to a second direction DR2. The first folding region FAa-1 may be outer-folded such that a rear surface of the second non-folding region NFAa-2 and a rear surface of the first non-folding region NFAa-1 face each other, and a display surface of the first non-folding region NFAa-1 faces outwards. The second folding region FAa-2 may be folded with respect to a fourth folding axis FX4 directed parallel to the second direction DR2. The second folding region FAa-2 may be inner-folded such that a display surface of the second non-folding region NFAa-2 and a display surface of the third non-folding region NFAa-3 face each other.

In an embodiment and referring to FIGS. 3A and 3C, the second folding region FAa-2 may be folded with respect to the fourth folding axis FX4 directed parallel to the second direction DR2. The second folding region FAa-2 may be inner-folded such that the display surface of the second non-folding region NFAa-2 is disposed inside, and the display surface of the third non-folding region NFAa-3 and the display surface of the second non-folding region NFAa-2 face each other. The first folding region FAa-1 may be folded with respect to the third folding axis FX3 parallel to the second direction DR2. The first folding region FAa-1 may be inner-folded such that a rear surface of the third non-folding region NFAa-3 and the display surface of the first non-folding region NFAa-1 face each other.

Additionally, the multi-folded state is not limited to the illustrations in FIGS. 3B and 3C and may have various folded forms.

According to an embodiment, the outer-folding operation and the inner-folding operation may be performed at the same time, or only one among the outer-folding operation and the inner-folding operation may be performed.

In an embodiment, the electronic device ED, ED-a, or ED-b may be provided to repeat operations from unfolding to inner-folding or outer-folding, but the invention is not limited thereto. In an embodiment, the electronic device ED, ED-a, or ED-b may be provided to select any one among the unfolding, inner-folding, and outer-folding operations. In addition, in case of including a plurality of folding regions, the folding direction of at least one, among the plurality of folding regions, may be different from the folding direction of the other folding regions. For example, in case of including two folding regions, two non-folding regions having one folding region disposed therebetween may be folded by the inner-folding operation, and two non-folding regions having the other folding region disposed therebetween may be folded by the outer-folding operation.

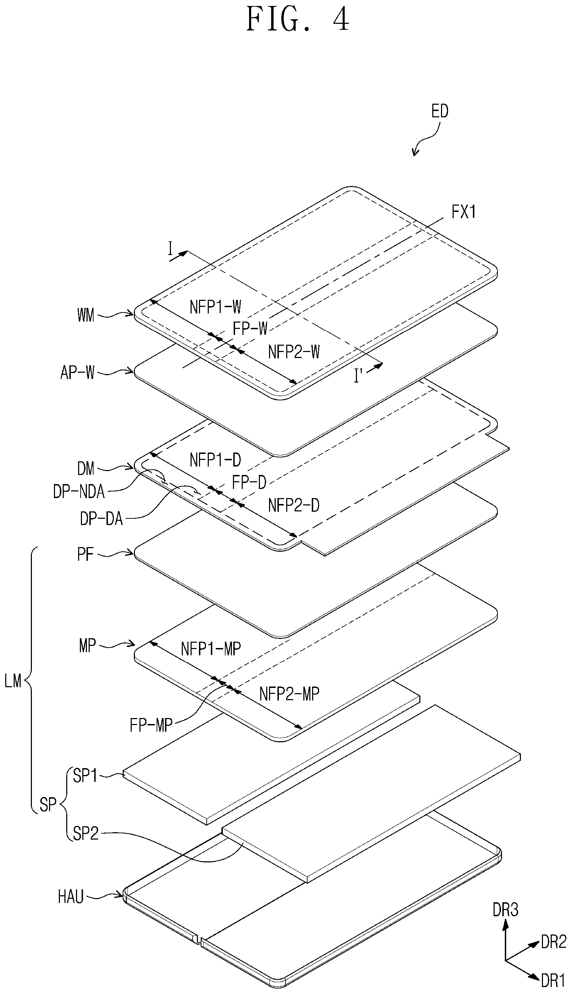

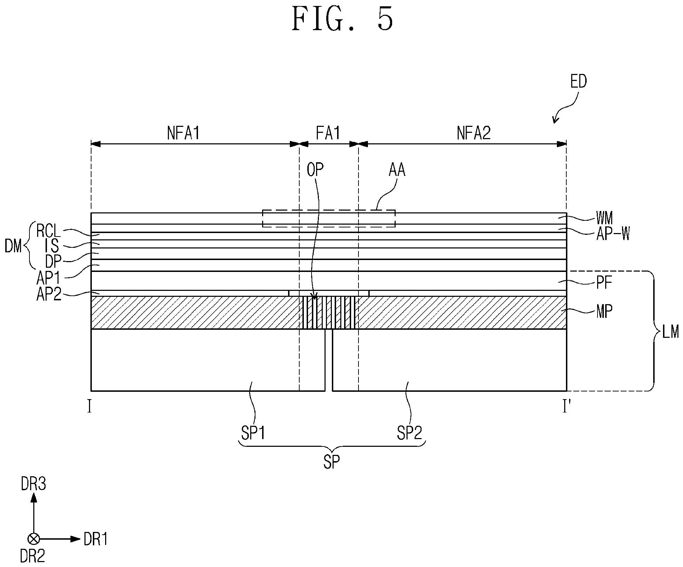

FIG. 4 is an exploded perspective view of an electronic device, according to an embodiment, and FIG. 5 is a cross-sectional view of an electronic device, according to an embodiment. FIG. 4 is an exploded perspective view exemplarily illustrating the electronic device, according to an embodiment, illustrated in FIG. 1A. FIG. 5 is a cross-sectional view illustrating a portion of the electronic device of FIG. 4 corresponding to line I-I' of FIG. 4, according to an embodiment.

FIGS. 4 and 5 below illustrate the case of the electronic device ED illustrated in FIG. 1A where the folding axis FX1 is directed parallel to a long side of the electronic device ED, but the invention is not limited thereto. Contents to be described with reference to the following drawings may also be applied to the case where the folding axis FX2 is directed parallel to a short side of the electronic device as illustrated in FIG. 2A or applied to the multi-foldable electronic device as illustrated in FIG. 3A.

In an embodiment and referring to FIGS. 4 and 5, the electronic device ED may include a display module DM, and a window WM disposed above the display module DM. In addition, the electronic device ED, according to an embodiment, may further include a lower module LM disposed under the display module DM.

In an embodiment, the electronic device ED may further include a window adhesive layer AP-W disposed between the display module DM and the window WM. In addition, although not illustrated in the drawing, a protection film (not shown) disposed on an upper side of the window WM may further be included. The protection film may be disposed on the upper side of the window WM and may thus protect the window WM from the external environment.

In an embodiment, the lower module LM may include a support plate MP disposed under the display module DM. The lower module LM may also be referred to as a support member.

In an embodiment, the electronic device ED may include a housing HAU that accommodates the display module DM and the lower module LM. The housing HAU may be coupled to the window WM. Although not illustrated in the drawing, the housing HAU may further include a hinge structure for facilitating folding or bending. The window WM may be a cover window disposed on the display module DM.

In an embodiment, the electronic device ED may include the window adhesive layer AP-W disposed between the display module DM and the window WM, where the window adhesive layer AP-W may be an optically clear adhesive (OCA) film, or an optically clear adhesive resin (OCR) layer. In another embodiment, the window adhesive layer AP-W may also be omitted.

In an embodiment, the window WM may cover the entire upper surface of the display module DM and may have a shape corresponding to the shape of the display module DM. The window WM may include a glass substrate, which may be used as a cover window of the electronic device.

In an embodiment, the glass substrate included in the window WM may be a tempered glass substrate. In addition, the glass substrate may be an ultra-thin glass substrate. The window WM will be described in more detail later.

In an embodiment, the window WM may include a folding part FP-W and non-folding parts NFP1-W and NFP2-W. A first non-folding part NFP1-W and a second non-folding part NFP2-W of the window WM may be spaced apart from each other in a first direction DR1 with the folding part FP-W disposed therebetween. The folding part FP-W may correspond to the folding region FA1, and the non-folding parts NFP1-W and NFP2-W may correspond to the non-folding regions NFA1 and NFA2.

In an embodiment, the display module DM may display an image in response to electrical signals, and may transmit/receive information on an external input. The display module DM may include a display region DP-DA and a non-display region DP-NDA. The display region DP-DA may be defined as a region where the image, provided from the display module DM, is displayed.

The non-display region DP-NDA is disposed adjacent to the display region DP-DA. For example, the non-display region DP-NDA may surround the display region DP-DA. However, this is exemplarily illustrated, the non-display region DP-NDA may be defined in various shapes and is not limited to any one embodiment. According to an embodiment, the display region DP-DA of the display module DM may correspond to at least a portion of the active region F-AA (see FIG. 1A).

In an embodiment, the display module DM includes a display panel DP. The display panel DP may be an emission-type display panel and is not particularly limited. For example, the display panel DP may be an organic light-emitting display panel or an inorganic light-emitting display panel. A light-emitting layer of the organic light-emitting display panel may include an organic light-emitting material. A light-emitting layer of the inorganic light-emitting display panel may include quantum dots, quantum rods, etc.

In an embodiment, the display module DM may further include an input sensor IS, where the input sensor IS may be directly disposed on the display panel DP. The input sensor IS may include a plurality of sensing electrodes and may detect an external input in a self-cap or mutual-cap type. The input sensor IS may also detect an input of an active-type input device.

In an embodiment, the input sensor IS may be directly formed on the display panel DP through a continuous process in the manufacturing of the display panel DP. However, the invention is not limited thereto, and the input sensor IS may be manufactured as a panel separately from the display panel DP, and may also be attached to the display panel DP by an adhesive layer (not shown).

In addition, the display module DM may further include an optical layer RCL, wherein the optical layer RCL may function to reduce reflection of external light. For example, the optical layer RCL may include a polarizing layer or a color filter layer. However, the invention is not limited thereto, and the optical layer RCL may include optical members for improving display quality of the electronic device ED.

In an embodiment, the optical layer RCL may be directly disposed on the input sensor IS. In addition, in case of omitting the input sensor IS in the display module DM, the optical layer RCL may be directly disposed on the display panel DP. However, the invention is not limited thereto, and the optical layer RCL may also be disposed on the display panel DP or the input sensor IS using a separate adhesion member.

In an embodiment, the display module DM may include a folding display part FP-D and non-folding display parts NFP1-D and NFP2-D. The folding display part FP-D may correspond to the folding region FA1 (see FIG. 1A), and the non-folding display parts NFP1-D and NFP2-D may correspond to the non-folding regions NFA1 and NFA2 (see FIG. 1A).

The folding display part FP-D may correspond to a portion folded or bent with respect to the first folding axis FX1 (see FIGS. 1B and 1C). The display module DM may include a first non-folding display part NFP1-D and a second non-folding display part NFP2-D, and the first non-folding display part NFP1-D and the second non-folding display part NFP2-D may be spaced apart from each other with the folding display part FP-D disposed therebetween.

In the electronic device ED, according to an embodiment, the lower module LM may include the support plate MP. In addition, the lower module LM, according to an embodiment, may further include at least one of a support module SP or a protection layer PF. For example, the electronic device ED, according to an embodiment, may include the support plate MP disposed under the display module DM, where the protection layer PF is disposed between the support plate MP and the display module DM, and the support module SP is disposed under the support plate MP.

In an embodiment, the support plate MP may be disposed under the display module DM, where the support plate MP may include a folding support part FP-MP and non-folding support parts NFP1-MP and NFP2-MP. A first non-folding support part NFP1-MP and a second non-folding support part NFP2-MP of the support plate MP may be spaced apart from each other with the folding support part FP-MP disposed therebetween. The folding support part FP-MP may correspond to the folding region FA1 (see FIG. 1A), and the non-folding support parts NFP1-MP and NFP2-MP may correspond to the non-folding regions NFA1 and NFA2 (see FIG. 1A). A plurality of openings OP may be defined in the support plate MP. The openings OP may be defined corresponding to the folding region FA1.

In an embodiment and referring to FIGS. 4 and 5, the protection layer PF may be disposed between the display module DM and the support plate MP. The protection layer PF may be a layer disposed on a lower side of the display module DM to protect a rear surface of the display module DM. The protection layer PF may overlap the entire display module DM. The protection layer PF may include a polymer material. For example, the protection layer PF may be a polyimide film or a polyethylene terephthalate film. However, this is an example, and the material of the protection layer PF is not limited thereto.

In an embodiment, the electronic device ED may include the support module SP, where the support module SP may include supporting layers SP1 and SP2. The supporting layers SP1 and SP2 may include a first supporting layer SP1 and a second supporting layer SP2 spaced apart from each other in the first direction DR1. The first supporting layer SP1 and the second supporting layer SP2 may be spaced apart from each other at a portion corresponding to the first folding axis FX1 (see FIGS. 1B and 1C). The supporting layers SP1 and SP2 may be spaced apart from each other in the folding region FA1, and may thus be provided as the first supporting layer SP1 and the second supporting layer SP2, thereby improving the folding or bending characteristics of the electronic device ED. Although not illustrated in the drawings, the supporting layers SP1 and SP2 may further include a cushion layer (not shown) and a lower supporting plate (not shown) stacked in the thickness direction.

In an embodiment, the lower supporting plate (not shown) may include a metal material or a polymer material. For example, the lower supporting plate may be formed by including stainless steel, aluminum, copper, or an alloy thereof.

In an embodiment, the cushion layer (not shown) may prevent pressure and deformation, caused by external impact and force, on the support plate MP. The cushion layer (not shown) may include an elastomer such as sponge, foam, or a urethane resin. In addition, the cushion layer (not shown) may be formed by including at least one of acrylate-based polymer, urethane-based polymer, silicon-based polymer, or imide-based polymer. However, the invention is not limited thereto. The cushion layer (not shown) may be disposed under the support plate MP, or under the lower supporting plate (not shown).

In addition, the lower module LM, according to an embodiment, may further include at least one of a buffer layer, a shielding layer, or an interlayer bonding layer. The shielding layer may be an electromagnetic shielding layer or a heat dissipation layer and the buffer layer may function as a thickness compensation layer or a supporting layer.

In the electronic device ED, according to an embodiment, the combination of components included in the lower module LM may vary according to the size, shape, operational characteristics, or the like of the electronic device ED.

In addition, the electronic device ED, according to an embodiment, may further include at least one adhesive layer AP1 or AP2. For example, a first adhesive layer AP1 may be disposed between the display module DM and the protection layer PF, and a second adhesive layer AP2 may be disposed between the protection layer PF and the support plate MP.

In an embodiment, at least one adhesive layer AP1 or AP2 may be an optically clear adhesive (OCA) film, or an optically clear adhesive resin (OCR) layer. However, the invention is not limited thereto, and at least one adhesive layer AP1 or AP2 may have a low transmittance that is about 80% or less.

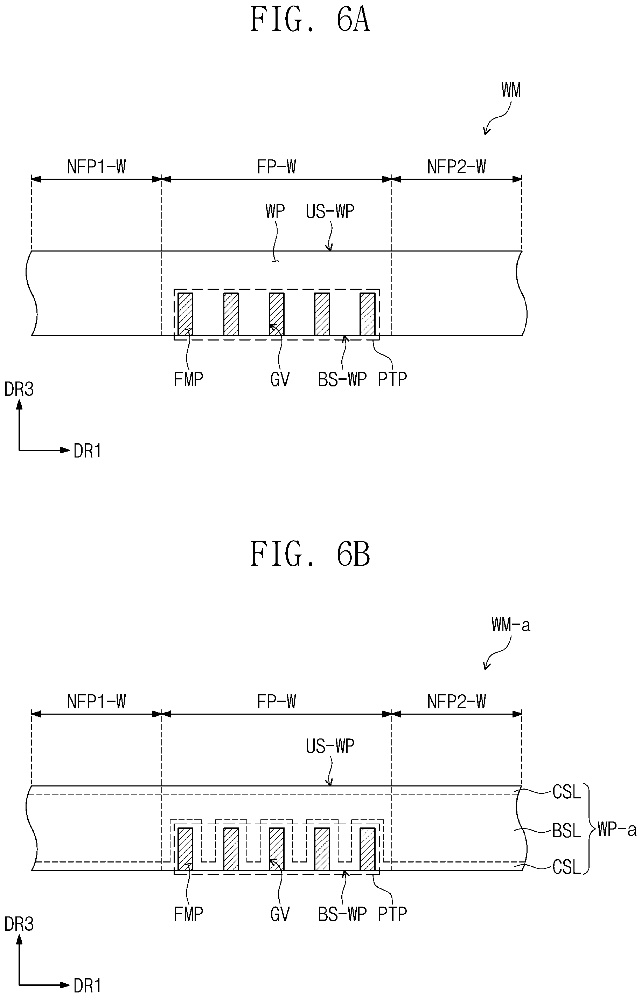

FIGS. 6A to 8 are cross-sectional views each illustrating a portion of a window, according to an embodiment. Each of FIGS. 6A to 8 illustrates the portion of the window corresponding to region AA of FIG. 5. Hereinafter, the window, according to an embodiment, to be described with reference to FIGS. 6A to 8, may be used as a cover window for the electronic device, according to an embodiment described with reference to FIGS. 1A to 5. In FIGS. 6A to 8, the illustrations are based on the shape of the window included in the electronic device ED according to the embodiment illustrated in FIGS. 1A to 1C, but the window, according to an embodiment, including the configuration of a folding part, to be described later, may also be included in an electronic device where the position and the number of folding regions are different.

In an embodiment and referring to FIG. 6A, the window WM may include a base glass WP and a filling part FMP. In the base glass WP, a groove part GV, recessed from at least one surface of an upper surface US-WP or a lower surface BS-WP, may be defined. FIG. 6A illustrates that the base glass WP includes the groove part GV formed by being recessed from the lower surface BS-WP, but the invention is not limited thereto, and the groove part GV may be defined in the upper surface US-WP of the base glass, or defined in both of the upper surface US-WP and the lower surface BS-WP.

In an embodiment, the window WM may include a folding part FP-W and non-folding parts NFP1-W and NFP2-W, where the non-folding parts NFP1-W and NFP2-W may be disposed adjacent to the folding part FP-W. In an embodiment, the window WM may include the folding part FP-W, and a first non-folding part NFP1-W and a second non-folding part NFP2-W spaced apart from each other in one direction with the folding part FP-W disposed therebetween.

In an embodiment, the folding part FP-W may correspond to the folding region FA1 (see FIG. 5) of the electronic device ED (see FIG. 5). The first non-folding part NFP1-W may correspond to the first non-folding region NFA1 of the electronic device ED (see FIG. 5), and the second non-folding part NFP2-W may correspond to the second non-folding region NFA2 of the electronic device ED (see FIG. 5).

The folding part FP-W corresponds to a portion which is foldable or bendable with respect to a virtual folding axis to be deformed and may be deformed into a folded or unfolded state.

In an embodiment, the groove part GV may be defined in the folding part FP-W of the window WM, and the filling part FMP may be disposed in the groove part GV. That is, the base glass WP, in which the groove part GV is defined, and the filling part FMP, which fills the groove part GV, may be disposed in the window WM, according to an embodiment.

The groove part GV may be defined in plurality, where distances between the plurality of groove parts GV in one direction may be the same, or at least one may be different from the others. The plurality of groove parts GV may be repeatably defined in the folding part FP-W to form a groove pattern PTP. The filling part FMP may fill recessed portions of the groove pattern PTP of the base glass WP. FIG. 6A illustrates the cross-sectional shape of each of the groove parts GV, which is filled with the filling part FMP, as a rectangle, but this is an example, and the cross-sectional shape of the groove part GV may be applied in various forms according to the folding or bending form of the window WM.

In an embodiment, folding characteristics of the window WM may be improved by the groove pattern PTP including the groove part GV. Due to the groove part GV, the window WM may be easily folded or bent to be deformed.

The non-folding parts NFP1-W and NFP2-W may not have the groove part defined therein and upper surfaces and lower surfaces of the non-folding parts NFP1-W and NFP2-W may be flat surfaces.

FIG. 6B is a cross-sectional view of a window, according to an embodiment. In a window WM-a, according to an embodiment, illustrated in FIG. 6B, a base glass WP-a may include a base layer BSL and a compressive stress layer CSL. That is, the base glass WP-a of the window WM-a, according to an embodiment, may be tempered glass. The base glass WP-a of the window WM-a, according to an embodiment, may be ultra-thin glass (UTG), where the ultra-thin glass (UTG) may have a thickness of about 30 $\mu$m to about 300 $\mu$m.

In an embodiment, the compressive stress layer CSL may be disposed on at least one of an upper part or a lower part of the base layer BSL, and FIG. 6B illustrates that the compressive stress layer CSL is disposed both on the upper part and the lower part of the base layer BSL. However, this is an example, and the compressive stress layer CSL may also be disposed only on either of the upper part of the base layer BSL or the lower part of the base layer BSL. The compressive stress layer CSL may be disposed along a groove pattern PTP. In the embodiment illustrated in FIG. 6B, the compressive stress layer CSL may be disposed adjacent to a lower surface BS-WP of the base glass WP-a along the groove pattern PTP.

For example, in an embodiment, the compressive stress on a surface of the base glass WP-a may be about 250 MPa to about 850 MPa. However, this is an example, and the value of the surface compressive stress of the base glass WP-a may be adjusted in consideration of the required range of durability and refractive index value for the window WM-a.

In the embodiments illustrated in FIGS. 6A and 6B, a filling part FMP may include a mineral with small chromatic aberration. The filling part FMP may include a base resin and the mineral may be dispersed within the base resin. The mineral included in the filling part FMP may have small chromatic aberration, and in case of having a low dispersion, the mineral may have characteristics of small chromatic aberration. In an embodiment, the mineral included in the filling part FMP may have a dispersion of about 0.02 or less. The dispersion of mineral corresponds to difference between the respective refractive indexes of red and purple colors of a spectrum. The refractive index of the red color is a value measured at about 686.7 nm, and the refractive index of the purple color is a value measured at about 430.8 nm. As the dispersion becomes lower, the difference in refractive index, according to the wavelength of the light, may become reduced. Accordingly, when the mineral with low dispersion is included in the filling part, the chromatic aberration of the filling part may be reduced, causing the difference in refractive index according to the wavelength to be reduced.

In an embodiment, the filling part FMP may include the base resin and the mineral dispersed in the base resin. For example, the mineral included in the filling part FMP may be fluorite ($CaF_2$), apatite ($Ca_5(PO4)_3X$), baryte ($BaSO_4$), or petalite ($LiAlSi_4O_{10}$), where in $Ca_5(PO_4)_3X$, X may be F, Cl, or OH. In particular, the dispersion of fluorite may be about 0.007, the dispersion of apatite may be about 0.013, and the dispersion of petalite may be about 0.014. Meanwhile, in addition to the above-described minerals, the filling part may include any mineral without limitation as long as it has a dispersion value of about 0.02 or less and has transparent color.

In an embodiment, the base resin may include at least one of an acrylate-based resin, a urethane-based resin, an epoxy-based resin, a polyester-based resin, a polyether-based resin, or an ABS resin.

In an embodiment, the filling part FMP may be formed through inkjet coating, slit coating, or the like. However, the invention is not limited thereto, and the filling part FMP may be formed by coating a resin, including the base resin and the mineral dispersed in the base resin, in various coating manners.

In the window WM or WM-a, according to an embodiment, the refractive index of the base glass WP or WP-a at a wavelength of about 589 nm may be about 1.50 to about 1.51. Difference in the refractive index between the filling part FMP, including the above-described mineral with low dispersion, and the base glass WP or WP-a may be about 0.01 or less at a wavelength of about 589 nm. In an embodiment, the refractive index of the filling part FMP may have a similar range with that of the base glass WP or WP-a. For example, in an embodiment, the refractive index of the filling part FMP may be about 1.505 or greater. However, this is an exemplary value, and the refractive index of the filling part FMP may be adjusted, so that the difference from the refractive index of the base glass may be minimized.

In the embodiments illustrated in FIGS. 6A and 6B, difference in Abbe's number between the base glass WP or WP-a and the filling part FMP may be about 2 or less, where the Abbe's number may be defined by:

$$\text{Abbe's number} = (n_D\text{-}1) \, / \, (n_F\text{-}n_C), \quad \text{[Equation 1],}$$

where, $n_D$ is the refractive index at about 587.6 nm, $n_F$ is the refractive index at about 486.1 nm, and $n_C$ is the refractive index at about 656.3 nm.

In an embodiment, the Abbe's number of the base glass WP or WP-a may be in the range of about 50 to about 52. In an embodiment, the Abbe's number of the filling part FMP may be in the range of about 48 to about 52. In an embodiment, the Abbe's number of the filling part FMP may have a similar range with that of the base glass WP or WP-a. For example, in an embodiment, the Abbe's number of the filling part FMP may be about 50 or greater. However, this is an exemplary value, and the Abbe's number of the filling part FMP may be adjusted, so that the difference from the Abbe's number of the base glass may be minimized.

In an embodiment, since the difference in Abbe's number between the base glass WP or WP-a and the filling part FMP is about 2 or less, the difference in refractive index between the base glass WP or WP-a and the filling part FMP in the entire visible-light range may be reduced. Accordingly, it may be possible to remedy a phenomenon of reflected light being viewed, where in the case of having the same refractive index only in a particular wavelength, light in the other wavelength regions is recognized as light in different wavelength regions. In addition, since the difference in refractive index between the base glass WP or WP-a and the filling part FMP is reduced in the entire visible-light range, the groove part GV, filled with the filling part FMP, and the groove pattern PTP may be viewed separately from the base glass WP or WP-a.

In an embodiment, according to the degree of strengthening of the base glass, the refractive index and the Abbe's number may be changed as shown in Table 1 below, and according to the refractive index of the base glass, the content of the mineral, which the filling part is filled with, may be changed.

[Table 1]

| Classification | Compressive stress (MPa) | Refractive index (at 587 nm) | Abbe's number |
|---|---|---|---|
| 1 | 849 | 1.5099 | 51.23 |
| 2 | 545 | 1.5073 | 50.62 |
| 3 | 258 | 1.5069 | 51.91 |

In the filling part FMP of the window WM or WM-a, according to an embodiment, the content of the mineral may be in the range of about 2 parts per hundred resin (phr) to about 6 phr. When the content of the mineral is in the range of about 2 phr to about 6 phr, the change in refractive index of the filling part may be minimized, and the difference in Abbe's number between the base glass and the filling part may be reduced. Table 2 below shows the compositions of the filling part according to the content of the mineral, and Table 3 below shows the results of evaluating optical characteristics of the filling part manufactured with the compositions of Table 2.

[Table 2]

| Classification | Acrylate resin (phr) | $LiAlSi_4O_{10}$ (phr) | Photoinitiator (phr) |
|---|---|---|---|
| Example 1 | 98 | 1 | 1 |
| Example 2 | 97 | 2 | 1 |
| Example 3 | 96 | 3 | 1 |
| Example 4 | 95 | 4 | 1 |
| Example 5 | 94 | 5 | 1 |
| Example 6 | 93 | 6 | 1 |
| Example 7 | 92 | 7 | 1 |
| Example 8 | 91 | 8 | 1 |
| Example 9 | 90 | 9 | 1 |
| Example 10 | 89 | 10 | 1 |
| Comparative Example | 99 | 0 | 1 |

[Table 3]

| Classification | Abbe's number | Refractive index (at 589 nm) |
|---|---|---|
| Example 1 | 47.5 | 1.505 |
| Example 2 | 49.6 | 1.507 |
| Example 3 | 506 | 1.505 |
| Example 4 | 50.4 | 1.508 |
| Example 5 | 51.6 | 1.509 |
| Example 6 | 50.5 | 1.507 |
| Example 7 | 52.4 | 1.504 |
| Example 8 | 54.8 | 1.503 |
| Example 9 | 54.9 | 1.507 |
| Example 10 | 57 | 1.509 |
| Comparative Example | 45.41 | 1.505 |
| Base glass | 50-51 | 1.507~1.509 |

In an embodiment and referring to Table 2 and Table 3, when the content of the mineral $LiAlSi_4O_{10}$ is in the range of about 2 phr to about 6 phr in the entire composition, the refractive index of the filling part may have a similar value with the refractive index of the base glass, and the difference in Abbe's number between the base glass and the filling part may be about 2 or less. In addition, in an embodiment, the transmittance of the filling part FMP may be about 90% or greater. The filling part FMP including the mineral may have a transmittance of about 90% or greater in the entire visible-light range.

Therefore, in an embodiment, when the filling part includes a mineral with low dispersion, the difference in refractive index between the base glass and the filling part may be minimized, and the difference in Abbe's number may also be minimized, so that the filling part being viewed separately from the base glass in the window may be addressed. In addition, when the filling part includes the mineral with low dispersion, it may be possible to reduce the reflected-light viewing that the filling part, unlike the base glass, is viewed as light in a different wavelength region, and to have high-transmittance characteristics.

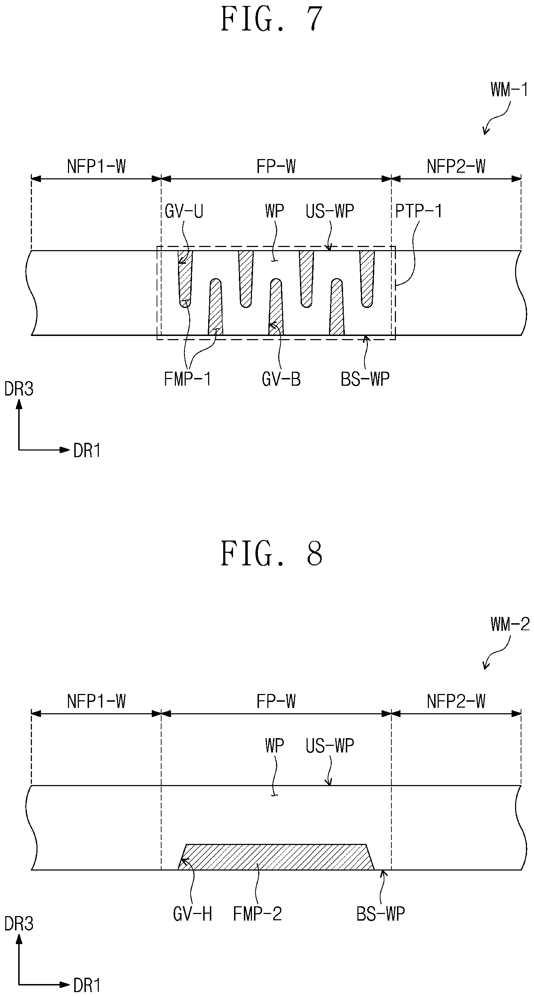

FIGS. 7 and 8 are cross-sectional views each illustrating a window, according to an embodiment. In describing the window, according to an embodiment, with reference to FIGS. 7 and 8, duplicate contents described with reference to FIGS. 1 to 6B will not be described again, and differences will be mainly described.

In an embodiment, in a window WM-1 illustrated in FIG. 7, a base glass WP may include groove parts GV-U and GV-B recessed respectively from an upper surface and a lower surface. In the window WM-1 according to an embodiment, the base glass WP may include an upper groove part GV-U recessed from the upper surface US-WP and a lower groove part GV-B recessed from the lower surface BS-WP. A plurality of groove parts GV-U and GV-B may be repeatably defined in a folding part FP-W to form a groove pattern PTP-1.

In an embodiment, folding characteristics of the window WM-1 may be improved by the groove pattern PTP-1 including the groove parts GV-U and GV-B. Due to the groove parts GV-U and GV-B, the window WM-1 may be easily folded or bent to be deformed.

In an embodiment, a filling part FMP-1 may be disposed in the groove parts GV-U and GV-B. That is, the base glass WP, where the groove parts GV-U and GV-B are defined, and the filling part FMP-1, which fills the groove parts GV-U and GV-B, may be disposed in the window WM-1, according to an embodiment.

In the embodiment illustrated in FIG. 7, the groove pattern PTP-1 may include the upper groove parts GV-U and the lower groove parts GV-B, and the upper groove parts GV-U and the lower groove parts GV-B may be alternately and repeatedly disposed. On a cross-section defined by a first direction DR1 and a third direction DR3, the upper groove part GV-U may have a width in the first direction DR1 gradually decreasing from the upper surface US-WP toward the lower surface BS-WP of the base glass WP. In addition, on the cross-section defined by the first direction DR1 and the third direction DR3, the lower groove part GV-B may have a width in the first direction DR1 gradually decreasing from the lower surface BS-WP toward the upper surface US-WP of the base glass WP. In an embodiment, one surface of the upper groove part GV-U, spaced apart from the upper surface US-WP, may be a curved surface, and one surface of the lower groove part GV-B, spaced apart from the lower surface BS-WP, may be a curved surface. Meanwhile, the shape of the groove part defined in FIG. 7 is an example, and the shape of the groove part may be variously changed. Meanwhile, a compressive stress layer is not separately illustrated in FIG. 7, but the base glass WP of the window WM-1, according to an embodiment, may be tempered glass that includes the compressive stress layer.

In the window WM-1, according to an embodiment, the filling part FMP-1 disposed in the groove parts GV-U and GV-B may include a mineral with low dispersion. The contents described with reference to FIGS. 6A and 6B may be equally applied to the filling part FMP-1. The mineral with low dispersion, included in the filling part FMP-1, may be fluorite ($CaF_2$), apatite ($Ca_5(PO4)_3X$), baryte ($BaSO_4$), or petalite ($LiAlSi_4O_{10}$), wherein $Ca_5(PO_4)_3X$, X may be F, Cl, or OH.

In the window WM-1, according to an embodiment, the difference in Abbe's number between the base glass WP and the filling part FMP-1 may be about 2 or less. In addition, in the window WM-1, according to an embodiment, the difference in refractive index between the base glass WP and the filling part FMP-1 at a wavelength of about 589 nm may be about 0.01 or less. The filling part FMP-1 may have a transmittance of about 90% or greater in a visible-light range.

Since the window WM-1, according to an embodiment, includes the mineral with low dispersion in the filling part FMP-1, it may be possible to remedy the phenomenon of reflected-light viewing where in the case of having the same refractive index only in a particular wavelength, light in the other wavelength regions is recognized as light in different wavelength regions. In addition, since the difference in refractive index between the base glass WP and the filling part FMP-1 is reduced in the entire visible-light range, the groove parts GV-U and GV-B, filled with the filling part FMP-1, and the groove pattern PTP-1 may be viewed separately from the base glass WP.

In an embodiment, in a window WM-2 illustrated in FIG. 8, a base glass WP may include a groove part GV-H recessed from a lower surface BS-WP. However, the invention is not limited thereto, and the base glass WP may include the groove part GV-H recessed from an upper surface US-WP. In the window WM-2, according to an embodiment, the base glass WP may be a glass substrate including a slimming part which forms the groove part GV-H with a relatively small thickness in a folding part FP-W. The groove part GV-H, which is formed by slimming a partial region corresponding to the folding part FP-W, may also be referred to as a groove pattern.

In an embodiment, folding characteristics of the window WM-2 may be improved by the groove part GV-H formed by slimming. Due to the groove part GV-H, the window WM-2 may be easily folded or bent to be deformed.

In the window WM-2, according to an embodiment, a filling part FMP-2 may fill the groove part GV-H.

In the window WM-2, according to an embodiment, the filling part FMP-2 disposed in the groove part GV-H may include a mineral with low dispersion. The contents described with reference to FIGS. 6A and 6B may be equally applied to the filling part FMP-2. The mineral with low dispersion included in the filling part FMP-2 may be fluorite ($CaF_2$), apatite ($Ca_5(PO4)_3X$), baryte ($BaSO_4$), or petalite ($LiAlSi_4O_{10}$), where in $Ca_5(PO_4)_3X$, X may be F, Cl, or OH.

In the window WM-2, according to an embodiment, a difference in Abbe's number between the base glass WP and the filling part FMP-2 may be about 2 or less. In addition, in the window WM-2, according to an embodiment, a difference in the refractive index between the base glass WP and the filling part FMP-2 at a wavelength of about 589 nm may be about 0.01 or less. The filling part FMP-2 may have a transmittance of about 90% or greater in a visible-light range.

Since the window WM-2, according to an embodiment, includes the mineral with low dispersion in the filling part FMP-2, it may be possible to remedy the phenomenon of reflected-light viewing, where in the case of having the same refractive index only in a particular wavelength region, light in the other wavelength regions is recognized as light in different wavelength regions. In addition, since the difference in the refractive index between the base glass WP and the filling part FMP-2 is reduced in the entire visible-light range, the groove part GV-H, filled with the filling part FMP-2, may be viewed separately from the base glass WP.

In an embodiment, the window, described with reference to FIGS. 6A to 8, may be included as a window of an electronic device. The electronic device, according to an embodiment, including the window may prevent a groove pattern, etc., included in the window, from being visible in a folding region. In the electronic device including the window, having a mineral with low dispersion in the groove pattern, it may be possible to address the phenomenon where folding marks or wrinkles are visible in the folding region, and to address that a reflection color is viewed as a color different from the surroundings due to the filling part filling the groove pattern. Accordingly, the electronic device, according to an embodiment, including the window may exhibit excellent display quality also in the folding region.

In the window, according to an embodiment, since the filling part, including the mineral with low dispersion, is disposed in a portion where a groove part is defined, the difference in Abbe's number between the base glass and the filling part may be minimized, to address the issue of the filling part being viewed separately from the base glass, or to address the issue of the reflection color being viewed.

The electronic device, according to an embodiment, may include the folding region, and may include the window which has the filling part, containing the mineral with low dispersion, disposed in the groove part defined corresponding to the folding region, and therefore, it may be possible to address that the filling part may be viewed separately from the base glass or that the reflection color is being viewed, thereby exhibiting excellent display quality.

A window, according to an embodiment, may include a filling part which fills a groove part defined in a folding part and has a small difference in Abbe's number from a base glass, and may thus have good folding characteristics, and have characteristics that reduce the marks on a folded portion being viewed to the outside or the issue of visible reflection color.

Since an electronic device, according to an embodiment, includes the window which is disposed above a display module and in which the difference in Abbe's number between the filling part, the groove part defined in the folding part, and the base glass is small, the electronic device may exhibit improved display quality and improved exterior characteristics also in the folding region while maintaining excellent folding characteristics.

Although embodiments of the invention have been described, it is understood that the invention should not be limited to these embodiments, but various changes and modifications can be made by one ordinary skilled in the art within the scope of the invention.

Therefore, the technical scope of the invention should not be limited to the contents described in the detailed description of the specification. In addition, embodiments disclosed are not intended to limit the invention, and all technical ideas disclosed herein should be construed as being included in the scope of the invention. Moreover, embodiments or parts of the embodiments may be combined in whole or in part without departing from the scope of the invention.

**Claims**

1. A window comprising:

   a base glass (WP) having an upper surface and a lower surface, the base glass including at least one groove part (GV) recessed into at least one of the upper surface or the lower surface; and
   a filling part (FMP) configured to fill the at least one groove part, and including a mineral having a dispersion degree of 0.02 or less,
   wherein the dispersion degree is a difference in a refractive index between a red color and a purple color of a color spectrum.

2. The window of claim 1, wherein the mineral is at least one of $CaF_2$, $Ca_5(PO_4)_3X$, $BaSO_4$, or $LiAlSi_4O_{10}$, and wherein X is at least one of F, Cl, or OH.

3. The window of claim 1 or 2, wherein a difference in Abbe's number between the base glass (WP) and the filling part (FMP) is 2 or less.

4. The window of any of the preceding claims, wherein the filling part (FMP) comprises the mineral and a base resin in which the mineral is dispersed, and
   wherein a content of the mineral is 2 phr to 6 phr within the entire filling part.

5. The window of claim 4, wherein the base resin comprises at least one of an acrylate-based resin, a urethane-based resin, an epoxy-based resin, a polyester-based resin, a polyether-based resin, or an ABS resin.

6. The window of any of claims 2 to 5, wherein the filling part (FMP) comprises the mineral and a base resin in which the mineral is dispersed, and

wherein a content of the mineral is 2 phr to 6 phr in the entire filling part.

7. The window of any of the preceding claims, wherein a refractive index of the base glass (WP) at a wavelength of 589 nm is 1.50 to 1.51.

8. The window of claim 7, wherein a difference in refractive index between the base glass (WP) and the filling part (FMP) at a wavelength of 589 nm is 0.01 or less.

9. The window of any of the preceding claims, comprising a folding part including the at least one groove part, and a non-folding part which is disposed adjacent to the folding part and in which the upper surface and the lower surface are flat surfaces.

10. The window of any of the preceding claims, wherein the base glass is tempered glass including a base layer and compressive stress layers respectively disposed on an upper part of the base layer and a lower part of the base layer.

11. The window of any of the preceding claims, wherein the base glass (WP) is ultra-thin tempered glass having a thickness of 30 $\mu$m to 300 $\mu$m.

12. The window of any of the preceding claims, wherein a transmittance of the filling part in a visible-light range is 90% or greater.

13. An electronic device comprising:

a display module (DM) including a folding display part foldable with respect to a folding axis extending in one direction, and a first non-folding display part and a second non-folding display part disposed apart from each other with the folding display part disposed therebetween; and
a window (WM) of any of the preceding claims, the window being disposed above the display module, and including a folding part corresponding to the folding display part, and a first non-folding part and a second non-folding part respectively corresponding to the first non-folding display part and the second non-folding display part.

# FIG. 1A

# FIG. 1B

# FIG. 1C

ED

NFA1  FA1

NFA2

EMA
F-NAA
F-AA
FS

FX1

RS

DR3
DR2
DR1

# FIG. 2A

# FIG. 2B

# FIG. 2C

ED-a

FS

F-NAA

F-AA

NFA4

FA2

FX2

RS

EMA

NFA3

DR3

DR2

DR1

# FIG. 3A

# FIG. 3B

# FIG. 3C

# FIG. 4

ED

FX1

I

WM

NFP1-W

FP-W

NFP2-W

AP-W

I'

DM

NFP1-D

DP-NDA

FP-D

DP-DA

NFP2-D

PF

MP

NFP1-MP

LM

NFP2-MP

FP-MP

SP1

SP

SP2

HAU

DR3

DR2

DR1

# FIG. 5

# FIG. 6A

# FIG. 6B

# FIG. 7

WM-1

| NFP1-W | FP-W | NFP2-W |

GV-U    WP    US-WP    PTP-1

FMP-1    GV-B    BS-WP

DR3

DR1

# FIG. 8

WM-2

| NFP1-W | FP-W | NFP2-W |

WP    US-WP

GV-H    FMP-2    BS-WP

DR3

DR1

Europäisches
Patentamt

European
Patent Office

Office européen
des brevets

## EUROPEAN SEARCH REPORT

**Application Number**

EP 25 15 4745

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2023/305598 A1 (KANG BYUNGHOON [KR] ET AL) 28 September 2023 (2023-09-28) * paragraphs [0007], [0010], [0018], [0116] - paragraphs [0120], [0154], [0188]; figures 1-18D * | 1-13 | INV. C03C17/32 G06F1/16 |
| A | EP 3 978 243 A1 (TOYO BOSEKI [JP]) 6 April 2022 (2022-04-06) * paragraphs [0001], [0014], [0031], [0034], [0035], [0060] - paragraphs [0061], [0071], [0072], [0075], [0089], [0093], [0106] * | 1-13 | |
| A | US 2022/002185 A1 (ORTNER ANDREAS [DE] ET AL) 6 January 2022 (2022-01-06) * paragraphs [0003], [0004], [0027], [0028], [0033], [0038], [0074] - paragraphs [0075], [0077], [0082], [0084]; claims 14,19 * | 1-13 | |

TECHNICAL FIELDS
SEARCHED (IPC)

C03C
G06F

The present search report has been drawn up for all claims

| Place of search | Date of completion of the search | Examiner |
|---|---|---|
| Munich | 1 July 2025 | Philippart, Anahí |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 15 4745

This annex lists the patent family members relating to the patent documents cited in the above-mentioned European search report.
The members are as contained in the European Patent Office EDP file on
The European Patent Office is in no way liable for these particulars which are merely given for the purpose of information.

01-07-2025

| Patent document cited in search report | Publication date | Patent family member(s) | Publication date |
|---|---|---|---|
| US 2023305598 A1 | 28-09-2023 | CN 116824985 A | 29-09-2023 |
| | | KR 20230139931 A | 06-10-2023 |
| | | US 2023305598 A1 | 28-09-2023 |
| EP 3978243 A1 | 06-04-2022 | CN 113874211 A | 31-12-2021 |
| | | EP 3978243 A1 | 06-04-2022 |
| | | JP 7435449 B2 | 21-02-2024 |
| | | JP 2024045245 A | 02-04-2024 |
| | | JP WO2020241281 A1 | 03-12-2020 |
| | | KR 20220013564 A | 04-02-2022 |
| | | TW 202110650 A | 16-03-2021 |
| | | US 2022246069 A1 | 04-08-2022 |
| | | WO 2020241281 A1 | 03-12-2020 |
| US 2022002185 A1 | 06-01-2022 | CN 113895113 A | 07-01-2022 |
| | | EP 3936485 A1 | 12-01-2022 |
| | | JP 2022014446 A | 19-01-2022 |
| | | KR 20220005404 A | 13-01-2022 |
| | | TW 202214532 A | 16-04-2022 |
| | | US 2022002185 A1 | 06-01-2022 |

EPO FORM P0459

For more details about this annex : see Official Journal of the European Patent Office, No. 12/82